# EUROPEAN PATENT APPLICATION

(11) **EP 1 788 733 A1**
(43) Date of publication of application: **23.05.2007**
(21) Application number: 05292480.0
(22) Date of filing: 18.11.2005
(51) Int. Cl.: H04B 10/18

(54) **Fiber optical system and method for synchronized polarization scrambling**

(71) Applicant: Alcatel Lucent, 75008 Paris (FR)
(72) Inventor: Junginger, Bernhard, 71229 Leonberg (DE); Lach, Eugen, Dr., 71672 Marbach (DE)
(74) Representative: Kohler Schmid Möbus

(57) **Abstract**

A fiber optical system (10') for transmitting an optical signal structured into successive FEC frames which repeat at a frame rate (1/τ1) comprises an optical fiber line (1) with at least one, preferably a plurality of successively arranged polarization scramblers (8a to 8c) for polarization modulation of the optical signal transmitted through the optical fiber line (1), and is characterized in that a scrambling rate (1/T_{sc}) of all of the polarization scramblers (8a to 8c) is equal or almost equal to the frame rate (1/τ1) of the FEC frames. A polarization scrambler and a corresponding method for transmitting an optical signal through the optical fiber line (1).

## Description

### Background of the invention

The invention relates to a fiber optical system for transmitting an optical signal structured into successive FEC frames which repeat at a frame rate, comprising an optical fiber line with at least one, preferably a plurality of successively arranged polarization scramblers for polarization modulation of the optical signal transmitted through the optical fiber line, to a polarization scrambler and to a method for transmitting an optical signal through that fiber line.

For mitigation of polarization mode dispersion (PMD) in high-speed Dense Wavelength Domain Multiplex (DWDM) optical transmission systems, it is common to use polarization scrambling. Conventional approaches use one scrambler at the transmitter site, or several scramblers distributed along several locations along the transmission (fiber) line, as described in detail in European patent application No. 05290078.4 by the applicant, incorporated herein by reference in its entirety.

Polarization Mode Dispersion expresses itself as statistically varying Differential Group Delay (DGD) between the two possible polarisation states in a fiber line, depending upon the actual polarization state of the transmitted optical signal, and may lead to the corruption of transmitted data bits if not compensated for. Polarization scrambling aims at a fast temporal (periodic) variation of the polarization state to the input of the fiber line (or fiber segment in case of several scramblers along a line). Due to the dependence of the effective DGD on the actual polarization state, the polarization scrambling causes a periodic variation of the effective DGD with the scrambling period. Within one scrambling period, there is normally exactly one polarization state for which the DGD attains a maximum/peak value.

Polarization scrambling is effectively used together with forward error correction (FEC) methods. In these methods, data bits at the transmitter are grouped together with (redundant) FEC bits into FEC frames of a certain length on a frame-by-frame scheme which are then transmitted with a constant transmission rate through the fiber line, such that each FEC frame corresponds to a constant time duration of transmission, the FEC frames repeating at a constant frame rate.

In a receiver after the transmission line, a FEC decoder is provided for separating the data bits from the FEC bits and for correcting errors in the data bits by using the redundant information from the FEC bits. The decoding algorithm is normally capable of correcting only a certain maximum number of erroneous bits per frame, due here mostly to DGD - caused signal distortion. Errors appear in bursts coinciding with temporarily high effective DGD, when polarization of input light causes even distribution between both major axes of the fiber.

Such bursts may be unevenly distributed between successive FEC frames due to aliasing, i.e. one FEC frame may be almost free from error-bursts, successive frames may show almost double average errors for extreme cases. In order to assure an error-free payload transmission, link budgets need be calculated for half the amount of errors that the FEC algorithm can correct in one frame for this case.

A scrambling rate much faster than the FEC frame rate could be chosen to keep penalties caused by this aliasing effect low. However, the scrambling rate is related to power consumption for the polarization scrambling, i.e. a higher scrambling rate increases the power consumption with some parts scaling linearly, some higher than linear, some lower than linear, depending on control electronics and power loss in the optical polarization modulator used for scrambling. Power consumption is a critical parameter since strict limits are given by common equipment practice, making lowest possible scrambling rates highly desirable.

### Object of the invention

It is the object of the invention to provide a fiber optical system of the kind described above which is capable of mitigating PMD by polarisation scrambling while improving power consumption.

### Short description of the invention

This object is achieved by a fiber optical system of the above-mentioned kind wherein a scrambling rate of all of the polarization scramblers present in the fiber line is equal or almost equal to the frame rate of the FEC frames. It is preferred that the scrambling rate coincides with the frame rate, but minor offsets between individual scrambling rates and FEC frame rate, e.g. less than 10 ppm, preferably less than 5 ppm, in particular less than 1 ppm, lead to minor variations in error distribution between the frames and should be acceptable for practical systems.

It should also be noted that in case of wavelength division multiplexing (WDM), in particular DWDM, it is preferred that all DWDM channels on the optical fiber line have the same FEC frame rate, or integer fractions thereof. Using the above principle in this case, lowest possible penalties using polarization scrambling are achieved together with lowest power consumption. Lowest, thus optimum, scrambling rate is equal to the common frame rate of the FECs implemented in the optical transmission system, with both being synchronous. This assures that worst-case DGD conditions appear exactly once in one FEC frame for all DWDM channels. Chromatic Dispersion effects of the optical fiber can be neglected for this purpose for all practical systems.

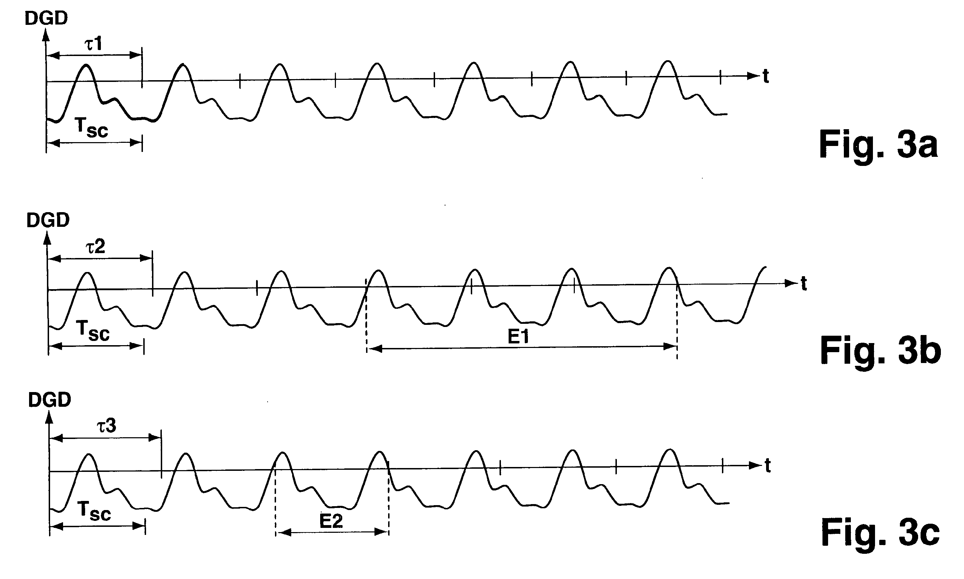

For a better understanding of the problem caused when reducing the scrambling rate of the polarization scramblers for improving the power consumption of the fiber optical system, **Fig. 3a-c** each represent a diagram of effective differential group delay (DGD) versus time for one DWDM-channel of an optical signal transmitted over a fiber line in which PMD is mitigated by polarization scrambling, the FEC frame rate being identical to the scrambling rate only in one of these cases.

In **Fig. 3a,** the scrambling is performed with a scrambling period T_{sc} being equal to the time duration **τ1** of consecutive FEC frames depicted on the time axis. The error bursts of the optical signal correspond to high effective DGD values which form a peak, e.g. as represented in Fig. 3a above the time axis, or a constant value given by system design. As the effective DGD is maximum for exactly one polarization state of the optical signal within the scrambling period T_{sc}, there is exactly one DGD peak value (error burst) in each FEC frame, which can be compensated for by the FEC decoding algorithm. However, if the frame rate is not equal to the scrambling rate, as is the case in **Fig**. **3b** and **Fig**. **3c** having frame rates 1/τ2 ≠ 1/T_{sc} and 1/τ3 ≠ 1/T_{sc}, respectively, aliasing between both rates leads to additional penalties since error bursts are unevenly distributed between successive FEC frames.

In Fig. 3b, for instance, there is more than one error burst in each of the three successive FEC frames in a time interval **E1,** and in Fig. 3c, there are two error bursts in only one FEC frame covering a time interval **E2**. Consequently, when scrambling rate and FEC frame rate are not identical, due to the uneven distribution of error bursts over the FEC frames, one FEC frame may be almost error-free, and successive frames may have almost double average errors. As the FEC decoding algorithm is only capable of correcting a certain maximum number of errors, such an uneven distribution must be avoided, which is possible when the FEC frame rate and the scrambling rate are chosen to be identical. Alternatively, the scrambling rate could be chosen to be much higher, e.g. 50 times the frame rate, leaving 49 to 51 error bursts in one FEC frame. However, the power consumption would be increased in this case, as described above. In fiber optical systems in which more than one polarization scrambler is present in an optical fiber line, the scrambling rates of all the scramblers have to be identical. Minor offsets between individual scrambling rates and FEC frame rate, e.g. 1 ppm, lead to minor variations in error distribution between frames and should be acceptable for practical systems.

In a highly preferred embodiment, an independent scrambling frequency generator is provided for each polarization scrambler. The correct scrambling frequency resp. scrambling rate (corresponding to the FEC frame rate) may be set for each scrambling frequency generator during set-up or maintenance of the transmission line. Yet, highly stable frequency generators (oscillators) are relatively expensive. Alternatively, to save on cost of the oscillator, the desired scrambling rate may be made available to each generator e.g. by using a maintenance channel in the optical signal.

In a preferred embodiment, at least one synchronization signal for synchronization of the polarization modulation of the polarization scramblers is provided, as the polarization modulation of individual scramblers has to be synchronized in frequency. All polarization scramblers along the fiber link may as well be synchronized to the same signal.

In a preferred variant of this embodiment, each polarization scrambler is in operable connection with a synchronization signal receiving means for receiving the synchronization signal from an external reference time distribution system. In this case, the scrambling frequency generators can be synchronized by a global reference system, e.g. GPS, GLONASS or future GALILEO.

In a further variant, part of the optical signal is branched from the fiber line to a synchronization signal extractor which extracts the synchronization signal from the received optical signal itself. In this variant, the polarization modulation generated by the preceding polarization scrambler(s) along the fiber line may be extracted from the optical signal at each of the successive scramblers serving as a reference to which the local polarization scrambler is phase locked with a PLL circuit.

It is preferred when the synchronization signal extractor comprises polarization component extracting means for extracting at least one polarization component from the optical signal. The synchronization signal is preferably derived from a small sample amount of the light from the fiber line by extracting horizontal, vertical, right- and left circular polarization components, detected by four photodiodes, bandpass filtered and fed to a diversity receiver.. At least one of the components is detectable at every instant to supply the reference frequency for scrambling, synchronous to the preceding scrambler(s).

In a further highly preferred embodiment, at least part of the optical signal is formed by a plurality of wavelength channels being structured into successive FEC frames which repeat at a common frame rate or almost the common frame rate, wherein transmission rates of the wavelength channels affected by PMD are integer multiples of each other. For the invention to be compatible with wavelength division multiplexing, the same FEC frame rate has to be used for all wavelength channels. Arbitrary but constant phase offsets will not impact the system performance, as well as very slow drifts of phase offsets. Interoperability between different link transmission rates on the same optical fiber for the different wavelength channels is given as long as these are harmonically related to each other as in the case e.g. for STM16 (2,488.32 Mbit/s), STM64 (9,953.28 Mbit/s), STM256 (39,813.12 Mbit/s). Signals not perceptibly affected by PMD effects due to low speed or low transmission distance may be transmitted at any speed without causing interference, providing full compatibility with legacy equipment.

A further aspect of the invention is realized in a polarization scrambler, in particular for use in a fiber optical system as described above, comprising a synchronization signal receiving means for receiving a synchronization signal from an external reference time distribution system, thus providing a polarization scrambler with a simple and effective way of synchronization.

A further aspect of the invention is realized in a method for transmitting an optical signal through an optical fiber line with at least one, preferably a plurality of successively arranged polarization scramblers for polarization modulation of the optical signal, comprising the steps of: structuring the optical signal into successive FEC frames, and transmitting the optical signal through the fiber line at a frame rate of the FEC frames which is equal or almost equal to a scrambling rate of the polarization scrambler(s).

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a first embodiment of a fiber optical transmission system according to the invention wherein each of a plurality of polarization scramblers along a fiber line is provided with a scrambling frequency generator receiving a synchronization signal from an external reference,
- Fig. 2: shows a second embodiment of a fiber optical transmission system according to the invention wherein a synchronization signal for the polarization scramblers is extracted from the optical signal transmitted through the fiber line,
- Fig. 3a-c: show the effective differential group delay versus time of a polarization scrambled signal for three different FEC frame rates, and
- Fig. 4a-c: show the effective differential group delay of an optical signal at each of the polarization scramblers of Fig. 1 and Fig. 2, respectively.

**Fig**. 1 shows a fiber optical transmission system **10** with an optical fiber line **1** for transmission of wavelength division multiplexed (WDM) optical signals at a high bit-rate. The fiber line 1 is arranged between a wavelength division multiplexer **2** which joins a plurality of wavelength channels to form the WDM signal, and a wavelength division demultiplexer **3** separating the wavelength channels after transmission. For generating a number n of wavelength channels, a corresponding number of transmitters **4a** to **4n** is provided at the input of the multiplexer 2, and an equal number of receivers **5a** to **5n** is provided at the output of the demultiplexer 3. Before each of the transmitters 4a to 4n, a forward error correction coder **6a** to **6n** is provided for encoding a data signal by grouping data bits together with (redundant) FEC bits into FEC frames of a certain length. For each wavelength channel, a forward error correction decoder **7a** to **7n** is arranged at the output of a respective receiver 5a to 5n, decoding the FEC bits and compensating for transmission errors of the data bits by using all bits received, including the redundant bits.

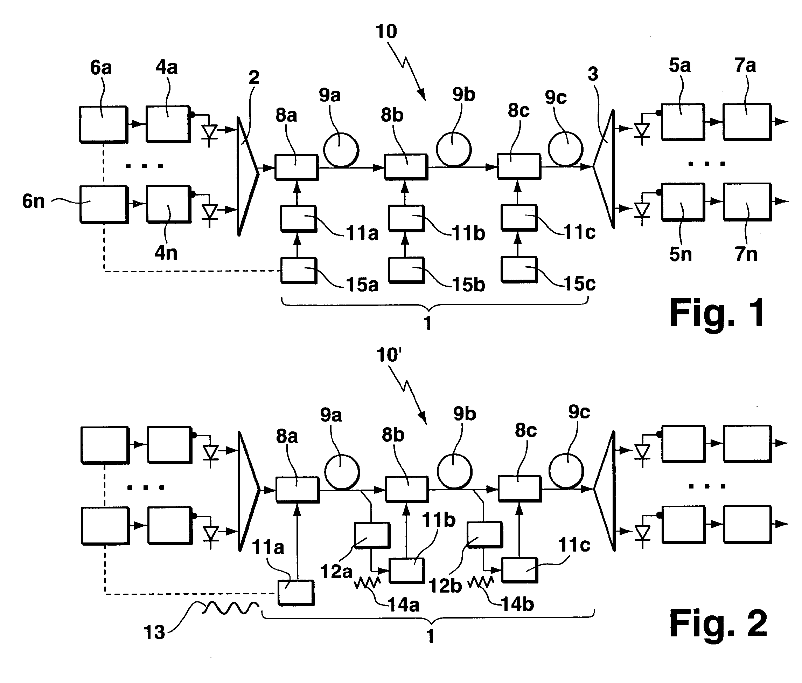

A plurality of polarization scramblers, of which three (**8a** to **8c**) are represented in Fig. 1, are distributed successively along the fiber line 1. Each of the polarization scramblers 8a to 8c is followed by a successive fiber segment **9a** to **9c**. The purpose of the polarization scramblers 8a to 8c is to provide scrambling signals which generate a periodic polarization change such that bit errors, which are generated by the interference of adjacent bit pulses of the optical signal transmitted through the fiber line 1 due to PMD, can be effectively reduced by error correction in the FEC decoders 5a to 5n. (Commonly this means that the total number of corrupted bits in each FEC frame is below a certain limiting number, so that the FEC is capable to correct all errors). For setting the scrambling rate resp. scrambling frequency, each polarization scrambler 8a to 8c is in operable connection with a respective scrambling frequency generator **11a** to **11c.**

Each of the transmitters 4a to 4n provides the FEC frames of a wavelength channel with a constant transmission rate. The transmission rates of different transmitters are either equal or an integer multiple of each other, as is the case, for instance, when using STM16 (2,488.32 Mbit/s), STM64 (9,953.28 Mbit/s), STM256 (39,813.12 Mbit/s) transmission rates. For the reasons discussed above in connection with Fig. 3, the scrambling rate 1/T_{sc} of each of the scramblers 8a to 8c is chosen to be equal to the common FEC frame rate 1/τ1 of all of the wavelength channels, or an integer multiple thereof. The FEC frames of the individual wavelength channels are also synchronized in phase by suitable synchronization means not shown in Fig. 1. An arbitrary but constant phase offset will not impact the system performance, as well as very slow drifts of the phase offsets.

When several polarization scramblers 8a to 8c are present along a fiber line, as is the case in Fig. 1, it is commonly not sufficient to set all of the scrambling frequency generators (oscillators) 11 a to 11 c to the same initial scrambling frequency/rate (identical to the FEC frame rate), as aging may cause statistical frequency drifts beyond acceptable limits during system lifetime. Reduction of frequency/phase drift between the individual polarization scramblers 8a to 8c to within acceptable limits is possible when using costly, highly precise oscillators.

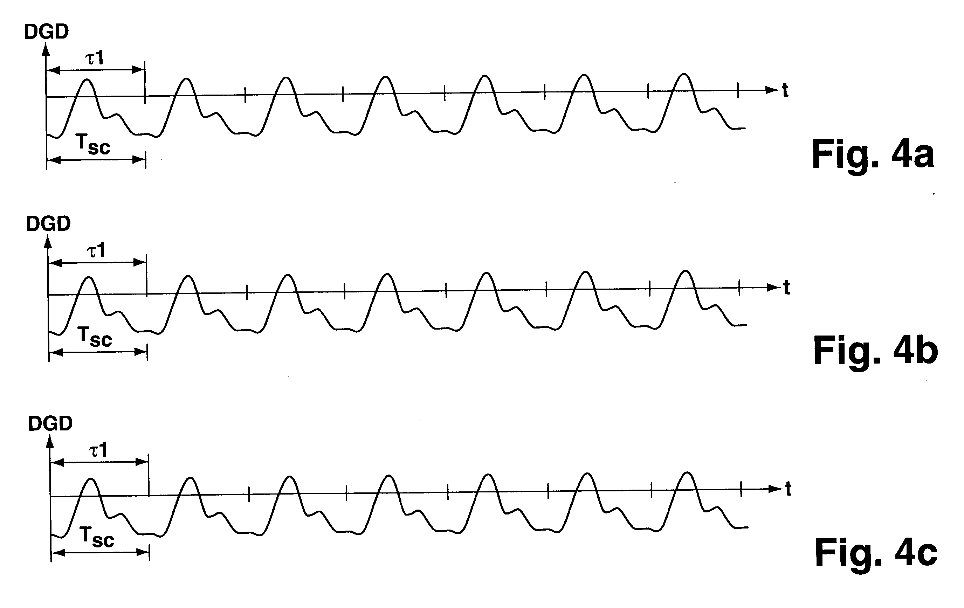

In the case described in Fig. 1, however, a synchronization signal from e.g. the GPS system (not shown) providing an external reference time, is used for eliminating the phase drifts. For receiving this signal, each of the frequency generators 11 a to 11 c is in operable connection with a respective synchronization signal receiving means **15a** to **15c** for phase-locking of the scramblers 8a to 8c. As a result, the scramblers 8a to 8c are synchronized in phase and frequency to the FEC frames, as can be gathered from **Fig. 4a-c,** representing effective DGD versus time at each of the three scramblers 8a to 8c. As there is only one error burst per FEC frame, the FEC error correction assures error-free transmission by correcting these errors. Note that, as indicated by the dashed line, the FEC coders 6a to 6n and transmitters 4a to 4n may be synchronized among themselves and to the first polarization scrambler 8a by suitable means (not shown) in a relatively cost-effective manner, as all of these elements are arranged at the same location.

In an alternative type of fiber optical system **10'** shown in **Fig**. **2**, the synchronization is performed by extracting the scrambling frequency and phase from the optical signal transmitted through the fiber line 1. In this case, a scrambling signal **13** is provided to the first frequency generator 11 a, having a frequency which corresponds to the FEC frame rate and is synchronized in phase to the FEC frames. As the first polarization scrambler 8a is located at the beginning of the fiber line 1, the scrambling signal 13 can be easily provided to it as indicated by the dashed line. For the second and third scramblers 8b, 8c being located at sites having a considerable distance from the first scrambler 8a, it is convenient to generate synchronization signals **14a**, **14b** being fed to the second and third frequency generators 11 b, 11 c by extracting the scrambling frequency and phase generated by the first scrambler 8a from the optical signal.

For this purpose, before the second and third scramblers 8b, 8c a small part of the optical signal is extracted from the fiber line 1 and input to respective synchronization signal extractors **12a**, **12b** which comprise polarization component extracting means (not shown) for extracting horizontal, vertical, right- and left-hand circular polarization components, feeding to four photodiodes, bandpass filtering and performing diversity reception of the four components. At least one of the polarization components is detectable at every instant to supply the reference frequency for scrambling, synchronous to the FEC frames. The outcome of this way of synchronization is essentially the same as described in connection with Fig. 1, resulting in the same DGD curves for the three scramblers 8a to 8c shown in Fig. 4.

Although being described above with respect to several polarization scramblers, it is understood that the invention may also be applied when only one polarization scrambler is present, which may be located preferably at one end of the fiber line. The invention allows for a reduction of the power consumption by polarization scrambling at the lowest possible rate (corresponding to the FEC frame rate).

## Claims

1. Fiber optical system (10; 10') for transmitting an optical signal structured into successive FEC frames which repeat at a frame rate (1/τ1), comprising an optical fiber line (1) with at least one, preferably a plurality of successively arranged polarization scramblers (8a to 8c) for polarization modulation of the optical signal transmitted through the optical fiber line (1),
**characterized in that**
a scrambling rate (1/T_{sc}) of all of the polarization scramblers (8a to 8c) is equal or almost equal to the frame rate (1/τ1) of the FEC frames.

2. Fiber optical system according to claim 1, **characterized in that** a scrambling frequency generator (11 a to 11 c) is provided for each polarization scrambler (8a to 8c).

3. Fiber optical system according to claim 1, **characterized by** at least one synchronization signal (14a, 14b) for synchronization of the polarization modulation of the polarization scramblers (8a to 8c).

4. Fiber optical system according to claim 3, **characterized in that** each polarization scrambler (8a to 8c) is in operable connection with a synchronization signal receiving means (15a to 15c) for receiving the synchronization signal from an external reference time distribution system.

5. Fiber optical system according to claim 3, **characterized in that** part of the optical signal is branched from the fiber line (1) to a synchronization signal extractor (12a, 12b) which extracts the synchronization signal (14a, 14b) from the optical signal.

6. Fiber optical system according to claim 5, **characterized in that** the synchronization signal extractor (12a, 12b) comprises polarization component extracting means for extracting at least one polarization component from the optical signal.

7. Fiber optical system according to claim 1, **characterized in that** at least part of the optical signal is formed by a plurality of wavelength channels being structured into successive FEC frames which repeat at a common frame rate (1/τ1) or almost the common frame rate (1/τ1), wherein transmission rates of the wavelength channels affected by PMD are integer multiples of each other.

8. Fiber optical system according to claim 7, **characterized in that** the FEC frames of different wavelength channels are synchronized or almost synchronized in phase.

9. Polarization scrambler (8a to 8c), in particular for use in a fiber optical system according to claim 1, comprising a synchronization signal receiving means (15a to 15c) for receiving a synchronization signal from an external reference time distribution system.

10. Method for transmitting an optical signal through an optical fiber line (1) with at least one, preferably a plurality of successively arranged polarization scramblers (8a to 8c) for polarization modulation of the optical signal,
comprising the steps of:
structuring the optical signal into successive FEC frames, and
transmitting the optical signal through the fiber line (1) at a frame rate (1/τ1) of the FEC frames which is equal or almost equal to a scrambling rate (1/T_{sc}) of the polarization scrambler(s).
